(19) Europäisches Patentamt
European Patent Office
Office européen des brevets

(11) EP 0 558 606 B1

(12) **EUROPEAN PATENT SPECIFICATION**

(45) Date of publication and mention of the grant of the patent: **05.06.1996 Bulletin 1996/23**

(21) Application number: **92900579.1**

(22) Date of filing: **13.11.1991**

(51) Int. Cl.$^6$: **B01D 53/14**, B01D 53/68, A62D 3/00, B01J 12/00

(86) International application number: **PCT/US91/08482**

(87) International publication number: **WO 92/08540 (29.05.1992 Gazette 1992/12)**

# (54) A PROCESS FOR REDUCING FREE HALOGENS IN RESIDUAL GASES

VERFAHREN ZUR REDUZIERUNG FREIER HALOGENE IN ABGASEN

PROCEDE DE REDUCTION D'HALOGENES LIBRES DANS DES GAZ RESIDUELS

(84) Designated Contracting States: **BE DE FR GB**

(30) Priority: **13.11.1990 US 614779**

(43) Date of publication of application: **08.09.1993 Bulletin 1993/36**

(73) Proprietor: **CABOT CORPORATION**
**Boston, MA 02109-1806 (US)**

(72) Inventor: **LEMAN, Gregory, W.**
**Champaign, IL 61821 (US)**

(74) Representative: **Fuchs, Luderschmidt & Partner**
**Patentanwälte**
**Postfach 46 60**
**65036 Wiesbaden (DE)**

(56) References cited:
**DE-A- 3 101 720**
**DE-A- 3 811 860**
**GB-A- 2 159 137**
**US-A- 3 086 851**
**US-A- 3 485 577**
**US-A- 3 954 945**
**US-A- 4 347 229**

EP 0 558 606 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.11.9/3.4

## Description

1. Field of the Invention

The invention pertains to the field of gas treatment process technology and more particularly, to a process for reducing the percentage by volume of free halogens in the reaction gases from a hydrolytic conversion of a volatile metal halide in a flame by the rapid mixing of gaseous hydrocarbons and hydrogen therein.

2. Background of the Invention

The production of fumed silica from chlorosilane feedstocks is well known in the art. The combustion of tetrachlorosilane with hydrogen and air in a pyrogenic burner is known. See for example Degussa, US-A- 4,276,274, DE-C-974,793, US-A- 2,990,249, US-A- 3,086,851, US-A- 3, 006,738, DE-A- 2,153,671 corresponding to US-A- 3,954,945.

Where residual gases are cooled with quench air, elevated oxygen levels are present. Typically, oxygen enriched residual gas streams produced by prior art methodologies include a range of components such as an aerosol oxide, about .5% free chlorine, less than about 15% oxygen, minor quantities of hydrogen, nitrogen, carbon dioxide, and trace materials in balance. After the fumed silica is removed, and the residual gas stream is introduced into an aqueous HCl absorber, the stream is either introduced into a caustic scrubber for chlorine removal, into an incinerator, or is vented into the atmosphere. Caustic scrubbing and incineration methodologies are expensive and include lengthy maintenance periods due to the corrosive nature of the gases. Venting to the atmosphere is objectionable due to the economic loss associated with the foregone sale of hydrochloric acid.

Several attempts have been made to reduce chlorine emissions. For example, the use of low molecular weight hydrocarbons and hydrogen as reactants for the reduction of chlorine is disclosed in US-A- 3,485,577. Ore oxide is combined with a carbonaceous reducing material and reacted with chlorine gas. Oxygen released from the ore oxides is depleted by the carbonaceous material, forming residual gases comprising unreacted chlorine, carbon dioxide, and carbon monoxide. Hydrogen or gaseous hydrocarbon is introduced by continuous or intermittent mixing systems including pressure reducing valves and pressure gauges. This approach is sensitive to residual gas temperature fluctuations; operating in a recommended range of 400 to 1300°C and a preferred range of 800-1000°C. The preferred temperature range is relatively high due to the depleted oxygen level in the system. In the recommended temperature range, chlorine would compete with oxygen for available reducing agents. In elevated oxygen systems, the available hydrogen would react preferentially to form water vapor in parts of the recommended and all of the preferred temperature ranges leaving chlorine in the residual gases. More precise temperature control would be required to preferentially remove chlorine rather than oxygen. Where gaseous hydrocarbons are dispersed in the residual stream, the process of the US-A-3,485,577 results in the presence of undesirable chlorinated hydrocarbons. A process for removing chlorine in a broad range of residual gas temperatures is therefore desirable.

The US-A-4,276,274 (Degussa) pertains to a process for reducing the chlorine emissions in the residual gas stream generated by the hydrolytic combustion of volatile metal halides. Temperature is controlled to a point below which the reduction of chlorine by hydrogen is favored over the formation of water vapor. An excess stoichiometric amount of hydrogen of about 2.5:1 moles of chlorine is disclosed. The hydrogen is added at residual stream temperatures of from about 500° to 700°C by single or multiple port dispersion devices such as molded nozzles. Although approximately 93% chlorine conversion is achieved, the process is very sensitive to temperature fluctuations.

A process for nearly quantitative chlorine conversion in processes employing an air quench would be a desirable advancement in the art.

A further process for dehalogenating residual gasses is disclosed in US-A-4,347,229 where a mixture of hydrogen and nitrogen is dispersed by means of a double jacketed pipe at temperatures between about 550° to 630°C. The pipe has two series of bores in the jacket through which the hydrogen can be introduced into the residual gas stream.

DE-C- 1,244,125 pertains to a process to control chlorine in the residual gas stream where a 50 to 80% proportion of the residual gasses are recycled into a closed burner chamber thereby eliminating the addition of secondary air to the reactants. Processes where the burner conditions are modified often result in product variability and are therefore undesirable.

A process for treatment of residual gasses which results in reduced halogen and halogenated hydrocarbon emission levels in oxygen containing streams would be a significant improvement in the art.

Another object of the present invention is a process for producing high quality, finely divided oxides of metals or metal halides with residual gases which ultimately contain reduced halogen levels, which uses conventional process equipment, and which operates in a broad temperature range.

Another objective of the present invention is a process for producing high quality, finely divided oxides of metal or halides with reduced halogen gas emissions by rapid dispersion of gaseous hydrocarbon and rapid dispersion of hydrogen by means which favor the reduction of free halogen and halogenated hydrocarbons.

Other objects will become known hereafter to those of ordinary skill in the art through the following specification, drawings, and claims as hereinafter provided.

Brief Description of the Drawings

Figure 1 is a schematic of the burner, cooling zone, and single dispersion site of a prior art system for the pyrogenic production of finely divided oxides of metal;

Figure 2 illustrates a cross sectional view of a prior art dispersion device detailed in Figure 1;

Figure 3 is a sectional view of a dispersion device used in the present invention;

Figure 4 is a sectional view of an alternate embodiment of the dispersion device of Figure 3;

Figure 5 illustrates a schematic of the burner, cooling zone, and multiple dispersant sites used in the present invention;

Figure 6 illustrates a graph of Table 5 data.

Accordingly, a process is provided for treating residual gases containing up to 15% oxygen and free halogens by the addition of gaseous hydrocarbons and hydrogen at multiple site locations in the cooling zone of the system. The residual gases are converted primarily into water soluble halogens, gaseous oxides of carbon such as carbon dioxide, and water vapor.

The present invention also uses a rapid dispersion device which has an outer cylindrical housing member generally concentric with respect to an imaginary longitudinal axis. The housing member comprises radially spaced walls which define a chamber for transporting treatment gases. A centrally disposed second cylinder member transports the residual gas from the burner through the cooling zone of the system. Means are provided for transporting gaseous hydrocarbons and hydrogen from the housing chamber to the reaction cylinder for complete dispersion therein. Although a cylindrical member is identified, it is known to those skilled in the art that a variety of non-cylindrical configurations may be used.

Referring now to Figure 1, a schematic is illustrated detailing the burner and cooling portions of a typical system for the hydrolytic conversion of volatile halogens of metals and mixtures thereof. For purposes of convenience, the pyrogenic oxidation of chlorosilanes will be focused on.

Residual gases such as chlorine, excess oxygen, and excess hydrogen are formed from the combustion of hydrogen with quantities of silicon tetrachloride, methyl trichlorosilane, and trichlorosilane. The gases pass from reaction chamber 10 to cooling zone 15 where the temperature is maintained at approximately 500° to 700°C. The HCl formed by the reaction of hydrogen, oxygen and silicon tetrachloride in a flame undergoes a secondary reaction in the presence of excess oxygen according to the following equation:

$$4HCl + O_2 \rightarrow 2H_2O + 2Cl_2$$

Referring to Figure 2, a dispersion device of the prior art is illustrated. Hydrogen diluted with nitrogen is introduced through inlet tube 20 which is attached to the wall of the reaction system cooling zone 15 at site 23 and extends radially through the walls of the cooling tube section. Two series of bore holes 25 function to disperse the diluted hydrogen. The inventors have discovered that prior art methodologies and dispersions devices as illustrated in Figures 1 and 2, suffer from the inability to maximize local dispersion in the residual gas stream where the temperature is controlled in favor of free chlorine removal. It is theorized that logically high concentrations of hydrogen in the oxygenated stream bias the competing reactions in favor of water vapor formation rather than chlorine removal. Prior art methodologies and dispersions devices are therefore of diminished utility in elevated oxygen systems. As illustrated in Table 1 and described further in Example 1, less than 1% of the available free chlorine was removed where high oxygen or open pyrogenic burner conditions were employed in the system and conditions described.

Referring to Figure 3, a dispersion device used in the present invention is illustrated. The device has a generally cylindrical housing member 30 which is concentric with respect to imaginary longitudinal axis 35. The housing member 30 includes radially spaced walls 40 which define chamber 45 through which gases are transported. A second cylindrical member 50, concentric with axis 35 and centrally disposed within housing member 30, transports residual gases from burner 10 through the cooling zone 15. In one embodiment of the invention, a plurality of communication means illustrated as cylindrical tube 55 extends radially like a wheel spoke from chamber 45 to second member 50. Although only one tube is illustrated, it is preferable to employ a range of 4 to 8 depending on the concentration of free chlorine present in the residual gases and the flow rates of treatment gases employed. Gases carried in housing member 30 are thereby transported by means 55 and uniformly dispersed within second member 50.

An alternate embodiment illustrated in Figure 4 depicts chamber 45 of Figure 3 as an annular passage 60 extending circumferentially within housing member 30. Passage 60 may be milled from the exterior surface of member 30 and sealingly enclosed by plate member 33 by bolts 37. High temperature sealing materials are known to those skilled in the art. Chamber 45 includes opposed flange members 50, 57 which extend radially with respect to imaginary axis 35, forming a circumferential slot. In yet a further embodiment, communication means 55 are oriented radially opposed with respect to each other and are bored from member 30 in a radial direction. Gases carried in housing member 30 are uniformly dispersed within the residual gas stream of flange member 50.

Although those skilled in the art will recognize that the dispersion time is dependent on several factors such as the velocity of the gas introduced, the diameter of cylindrical tube 50, and the flow characteristics of the residual gas; for purposes of the present invention, uniform dispersement shall be defined to exist for those conditions where for example, treatment gases introduced into an 20,32cm diameter carrying tube, at a flow rate of 113 m /sec, achieve complete dispersion in about .05 seconds or less. A temperature profile of the reaction of gases in the cooling zone and sampling of the extent of chlorine conversion provide the basis for calculating the dispersion time.

While nearly 98% chlorine conversion is obtained by introducing hydrogen with the dispersing means used in the present invention, the mixing intensity, hydrogen dilution, and relatively narrow temperature range necessary to obtain high chlorine conversions, are factors which detract from the commercial application of the process. A process which is less sensitive to reaction temperatures and which maintains the elevated level of chlorine conversion disclosed above is a desirable improvement in the art.

The data of Table 4 illustrates the extent of chlorine conversion and chloromethane content in the residual gas stream due to the addition of natural gas at two separate sites 65, 70 in the cooling zone of Figure 5. While natural gas was selected, gaseous hydrocarbons having the formula of $C_nH_{2n+2}$ where n is 1 to 4 is contemplated by the present invention.

As illustrated, the process apparatus, including burner 10 and cooling zone 15 of Figure 1 was employed. The reactants and conditions disclosed in Example 4 were also used. At temperatures between about 704°C to 771°C , up to 98% conversion of chlorine was achieved. Between about 20 to 100 ppmv of chloromethanes remained in the product gases.

The inventor has discovered that further reductions in the total chloromethane content were achievable by the addition of a third dispersant site 75, down stream of the dispersion sites 65 and 70 of Figure 5. As illustrated in the graph of Figure 6, 35 to 80% of chloromethanes present were removed by the injection of hydrogen at product gas temperatures from 660°C to 716°C . Reduced sensitivity to temperature and elevated levels of chlorine and chloromethane conversion are thereby obtained.

Example 1 (comparative)

Approximately 175 kg/h (386 lb/h) and 303 kg/h of methyltrichlorosilane and silicon tetrachloride was introduced to a CAB-O-SIL® fumed silica burner (CAB-O-SIL is a registered trade-mark of Cabot) with 628,7 $m^3$/h (22,200 scfh) of combustion (Com.) air and 92,3 $m^3$/h of hydrogen. About 0,85 $m^3$/h of hydrogen was injected through the burner mantle to diminish mantle contamination. Approximately 787,3 $m^3$/h of quenching air was added to the residual gases generated. The quenched residual gas stream contained 70.2% Nitrogen, 12.3% Oxygen, 14.6 % Hydrochloric acid, 0.63 % Chlorine, 1.77 % Carbon Dioxide, and 0.55 % Water by mole percent.

According to the prior art processes, hydrogen, diluted with nitrogen in a 5:1 by volume proportion was injected at a rate of about 2,83 to about 6,37 $m^3$/h while temperatures at the injection site were held to between about 496-579°C . The quantity of hydrogen introduced to the residual gases formed a stoichiometric mole ratio of up to 1.5 with respect to free chlorine present in the residual gases. The dispersion device consisted of a single pipe having a diameter of between a 1,27 cm to a 0,635 cm diameter which radially traversed the outer housing of the cooling zone and the residual gas carrying member, and which projected into the center of the residual gas stream.

Gas samples taken from the residual stream by a reduced pressure line were bubbled through water. The aqueous solution formed was analyzed for chlorine content and HCl by titration with 0.1N sodium thiosulfate and silver nitrate respectively. A conversion of free chlorine to HCl of less than 1 percent was achieved as illustrated in the data of Table 1 below.

TABLE 1

| Load. kg/h* | %MTCS | Com. $H_2$, m³/h | I.Temp °C | $H_2$ I. rate m³/h | %Vol. $Cl_2$ | %Vol. HCl |
|---|---|---|---|---|---|---|
| 451 | 37.55 | 115,4 | | | 0.36 | 11.16 |
| 451 | 37.55 | 115,4 | 532 | 2,83 | 0.40 | 11.43 |
| 451 | 37.55 | 115,4 | 532 | 3,40 | 0.43 | 12.06 |
| 451 | 37.44 | 115,4 | | 0 | 0.48 | 14.98 |
| 451 | 37.44 | 115,4 | | 0 | 0.49 | 15.32 |
| 451 | 37.44 | 115,4 | 551 | 2,83 | 0.48 | 15.39 |
| 451 | 37.44 | 115,4 | 551 | 3,40 | 0.48 | 14.98 |
| 451 | 37.17 | 115,4 | | 0 | 0.44 | 15.22 |
| 451 | 37.17 | 115,4 | | 0 | 0.45 | 14.61 |
| 451 | 37.17 | 115,4 | 496 | 3,40 | 0.48 | 14.79 |
| 451 | 37.17 | 115,4 | 496 | 4,19 | 0.44 | 14.47 |
| 478 | 36.7 | 92,3 | | 0 | 0.82 | 17.34 |
| 478 | 36.7 | 92,3 | | 0 | 0.69 | 16.83 |
| 478 | 36.7 | 92,3 | 579 | 5,66 | 0.76 | 16.91 |
| 478 | 36.7 | 92,3 | 579 | 6,37 | 0.76 | 17.28 |

* kg/h feedstock blend (the blend being methyl trichlorosilane and silicon tetrachloride)

Example 2 (comparative)

The hydrolysis system illustrated in Figure 1 was operated in accordance with the procedures of Example 1 and apparatus of Figure 3 except as follows. A hydrogen and nitrogen gas mixture was combined in a volume to volume ratio of about 1.46 to 24.60 and was injected at a rate of about 12 to 62,3 m³/h into the residual gas stream. Temperatures at the injection site (I.TEMP.) were controlled in a range of about 521°C to about 632°C . The amount of hydrogen added to chlorine present in the residual gas was equivalent to a molar ratio of from about 0.55 to about 3.39. The result obtained are presented in Table 2 below. Chlorine conversion of as high as about 97% was achieved.

TABLE 2

| SINGLE-STAGE HYDROGEN INJECTION DATA | | | | | |
|---|---|---|---|---|---|
| I.TEMP. °C | $Cl_2$RATE gmol/sec | $H_2$ /$Cl_2$ | $N_2$ /$H_2$ | FINAL $Cl_2$ VOL. % | % $Cl_2$ CONV |
| 632 | 0.036 | 0.55 | 21.30 | 0.51 | 36.4 |
| 632 | 0.036 | 0.92 | 12.80 | 0.35 | 57.9 |
| 632 | 0.036 | 1.10 | 10.67 | 0.32 | 61.7 |
| 566 | 0.045 | 0.60 | 24.60 | 0.25 | 59.9 |
| 566 | 0.045 | 1.11 | 13.33 | 0.12 | 81.2 |
| 566 | 0.045 | 1.94 | 7.62 | 0.02 | 96.7 |
| 624 | 0.024 | 1.85 | 8.89 | 0.07 | 61.1 |
| 624 | 0.024 | 3.29 | 5.00 | 0.18 | 8.2 |
| 616 | 0.024 | 3.29 | 9.58 | 0.03 | 83.4 |
| 571 | 0.022 | 3.14 | 10.36 | 0.01 | 95.0 |
| 610 | 0.022 | 3.18 | 5.48 | 0.01 | 92.6 |
| 610 | 0.022 | 1.82 | 9.58 | 0.01 | 92.0 |
| 543 | 0.020 | 1.68 | 10.00 | 0.08 | 46.5 |
| 543 | 0.020 | 2.53 | 6.67 | 0.09 | 45.1 |
| 521 | 0.020 | 2.53 | 13.67 | 0.11 | 27.9 |
| 577 | 0.023 | 1.53 | 8.38 | 0.07 | 83.3 |
| 588 | 0.023 | 1.53 | 3.05 | 0.44 | 3.7 |
| 588 | 0.023 | 2.98 | 3.05 | 0.44 | 0.0 |
| 585 | 0.023 | 3.05 | 3.95 | 0.44 | 0.0 |
| 599 | 0.029 | 1.26 | 5.64 | 0.35 | 31.0 |
| 599 | 0.029 | 2.41 | 2.95 | 0.50 | 0.0 |
| 610 | 0.029 | 1.26 | 2.91 | 0.54 | 0.0 |
| 610 | 0.029 | 2.41 | 1.46 | 0.52 | 0.0 |
| 566 | 0.033 | 1.06 | 3.81 | 0.64 | 2.3 |
| 566 | 0.033 | 1.46 | 2.76 | 0.64 | 0.0 |
| 571 | 0.033 | 1.06 | 5.45 | 0.21 | 67.7 |
| 571 | 0.033 | 1.46 | 4.14 | 0.44 | 29.6 |
| 549 | 0.028 | 1.06 | 6.44 | 0.16 | 65.8 |
| 549 | 0.028 | 1.50 | 4.64 | 0.10 | 78.8 |

Example 3 (comparative)

The procedures and apparatus of Example 2 were used except as otherwise described. Natural gas was introduced into the residual gas stream at a single site location while the temperature of the site was maintained at from 632°C to about 743°C. The molar ratio of methane to chlorine was between .5 to .75. The dilution ratio of nitrogen to natural gas was from 0 to 15.80. Conversion of chlorine of as high as about 98% was achieved as illustrated below in Table 3.

TABLE 3

| SINGLE-STAGE NATURAL GAS INJECTION DATA | | | | | |
|---|---|---|---|---|---|
| I.% TEMP. °C | $Cl_2$RATE gmol/sec | "$CH_4$" /$Cl_2$ RATIO | $N_2$/"$CH_4$" RATIO | FINAL$Cl_2$ VOL.% | % $Cl_2$ CONV |
| 743 | 0.052 | 0.50 | 5.08 | 0.55 | 46.0 |
| 743 | 0.052 | 0.75 | 3.39 | 0.21 | 79.5 |
| 738 | 0.052 | 0.75 | 2.80 | 0.10 | 91.8 |
| 732 | 0.052 | 0.75 | 5.90 | 0.07 | 94.1 |
| 732 | 0.052 | 0.50 | 9.00 | 0.31 | 73.9 |
| 666 | 0.034 | 0.50 | 7.70 | 0.22 | 74.4 |
| 666 | 0.034 | 0.75 | 5.22 | 0.04 | 95.4 |
| 632 | 0.034 | 0.75 | 10.70 | 0.05 | 94.5 |
| 632 | 0.034 | 0.50 | 15.80 | 0.16 | 80.4 |
| 649 | 0.034 | 0.50 | 0.00 | 0.22 | 75.0 |
| 649 | 0.034 | 0.75 | 0.00 | 0.02 | 97.7 |

Example 4 (comparative)

The reaction according to the procedures and apparatus of Example 2 were used except as follows. Natural Gas was introduced to the residual gas stream at two site locations in the cooling tube. Both sites utilized the dispersion devise of Figure 3. Site temperatures were held in the range of 693 - 793°C and 638 - 782°C respectively. Natural Gas was injected into the residual gas stream at stoichiometric ratios (H/Cl) of 1 to 1.4 and 0.10 to 0.35 per site. Samples were taken downstream of the second injection site and analyzed by mass spectrometer for chloromethane content. A range of about 5 to about 100 ppm was found for the temperatures and conditions discussed. Chlorine conversion (CONV.) to HCl of up to 98% was achieved. The results obtained are set forth below in Table 4.

TABLE 4

| TWO-STAGE NATURAL GAS INJECTION DATA | | | | | | |
|---|---|---|---|---|---|---|
| T1 °C | T2 °C | $Cl_2$ RATE gmol/sec | STOIC. RATIO 1 | STOIC. RATIO 2 | $Cl_2$ VOL % | TOTAL CL-METH PPMV |
| 693 | 649 | 0.037 | 1.0 | 0.10 | 0.100 | 8.00 |
| 693 | 638 | 0.037 | 1.0 | 0.20 | 0.020 | 9.04 |
| 704 | 643 | 0.037 | 1.2 | 0.17 | 0.090 | 54.50 |
| 704 | 649 | 0.037 | 1.2 | 0.35 | 0.020 | 86.20 |
| 704 | 654 | 0.037 | 1.4 | 0.15 | 0.060 | 59.50 |
| 704 | 654 | 0.037 | 1.4 | 0.30 | 0.010 | 99.20 |
| 704 | 716 | 0.050 | 1.0 | 0.10 | 0.170 | 44.40 |
| 704 | 727 | 0.050 | 1.0 | 0.20 | 0.090 | 41.00 |
| 743 | 710 | 0.050 | 1.0 | 0.10 | 0.230 | 32.20 |
| 735 | 693 | 0.050 | 1.0 | 0.20 | 0.090 | 38.30 |
| 738 | 704 | 0.050 | 1.2 | 0.17 | 0.190 | 19.40 |
| 743 | 693 | 0.050 | 1.2 | 0.35 | 0.040 | 42.70 |
| 743 | 693 | 0.050 | 1.4 | 0.15 | 0.050 | 18.10 |
| 738 | 693 | 0.050 | 1.4 | 0.30 | 0.020 | 44.10 |
| 749 | 716 | 0.060 | 1.2 | 0.35 | 0.030 | 32.10 |
| 771 | 732 | 0.060 | 1.4 | 0.30 | 0.020 | 28.70 |
| 793 | 760 | 0.059 | 1.0 | 0.10 | 0.310 | 24.20 |
| 782 | 754 | 0.059 | 1.0 | 0.20 | 0.210 | 24.60 |
| 788 | 743 | 0.059 | 1.2 | 0.17 | 0.340 | 17.70 |
| 788 | 754 | 0.059 | 1.2 | 0.35 | 0.030 | 23.50 |
| 782 | 777 | 0.059 | 1.4 | 0.15 | 0.005 | 13.50 |
| 782 | 782 | 0.059 | 1.4 | 0.30 | 0.005 | 89.80 |
| 793 | 760 | 0.048 | 1.4 | 0.15 | 0.120 | 6.60 |
| 793 | 760 | 0.048 | 1.4 | 0.30 | 0.110 | 4.80 |

Example 5

The procedures and apparatus of Example 4 were used in the present Example. In addition, hydrogen was injected at a location site subsequent to the two previously designated sites for natural gas addition. A quantity of hydrogen was introduced at a rate of about 1,98 - 8,50 $m^3/h$ while temperatures for the three dispersion sites were maintained in the range of 604 - 782°C . A stoichiometric ratio of hydrogen to chlorine in the untreated gas stream of between .5 and 2.0 was used. Where the quantity of hydrogen introduced formed a ratio of about 1 with respect to chlorine and the injection temperature was controlled at about 671 to 716°C , total chloromethane levels were reduced to less than 30 ppmv. (parts per million volume) Table 5 is illustrates the extent of chloromethane conversion in the residual gases as a result to hydrogen addition.

TABLE 5

| TWO-STAGE NATURAL GAS INJECTION WITH HYDROGEN INJECTION FOR CHLOROMETHANE REDUCTION | | | | | | | |
|---|---|---|---|---|---|---|---|
| TEMP 1 °C | TEMP 2 °C | TEMP 3 °C | STOIC. RATIO 1 | STOIC. RATIO 2 | H2 FLOW $m^3/h$ | FINAL $CL_2$ VOL. | CL-METH PPM V % |
| 693 | 682 | N/A | 1.47 | 0.32 | 0 | 0.01 | 61.9 |
| 693 | 682 | 660 | 1.47 | 0.32 | 3,23 | 0.01 | 39.7 |
| 638 | 627 | N/A | 1.40 | 0.30 | 0 | 0.03 | 141.2 |
| 649 | 627 | 604 | 1.40 | 0.30 | 3,23 | 0.01 | 120.6 |
| 760 | 693 | N/A | 1.40 | 0.30 | 0 | 0.01 | 58.2 |
| 749 | 693 | 671 | 1.40 | 0.30 | 3,23 | 0.01 | 29.9 |
| 771 | 754 | N/A | 1.40 | 0.20 | 0 | 0.19 | 15.4 |
| 782 | 760 | 671 | 1.40 | 0.20 | 3,23 | 0.08 | 8.2 |
| 782 | 766 | 716 | 1.40 | 0.20 | 8,50 | 0.04 | 3.3 |
| 743 | 760 | N/A | 1.63 | 0.20 | 0 | 0.06 | 9.24 |
| 743 | 760 | 693 | 1.63 | 0.20 | 3,23 | 0.06 | 7.89 |
| 743 | 749 | 682 | 1.63 | 0.20 | 1,98 | 0.07 | 7.51 |

In another embodiment of the present invention both the gaseous hydrocarbon and the gaseous hydrogen are introduced simultaneously. The volume percents, temperatures, etc. are the same as the sequential addition except that the reactions as described in the sequential addition take place at one time. The key to success both in the sequential and simultaneous gas additions is to add sufficient amounts of hydrocarbon and hydrogen such that temperatures between 704°C and 788°C, preferably 732°C to 788°C , and most preferably 760°C are reached and maintained during gaseous reaction.

Example 6

The procedures and apparatus of Example 3 were used except as otherwise described. Both the natural gas and hydrogen were introduced into the residual gas stream at a single site location while the temperature of the site was maintained at from 632°C to about 743°C The molar ratio of methane to chlorine was between 0.5 to 0.75. A stoichiometric ratio of hydrogen to chlorine in the untreated gas stream of between 0.5 and 2.0 was used. Conversion of chlorine of as high as about 99% was achieved. The total chloromethane level when treating chlorine by this process was as low as 3 ppmv up to 30 ppmv, with 6 to 9 ppmv most common.

As a result of the primary reactions which generate the residual gasses of interest present in the present process, the residual gases will typically contain anywhere from about 100 parts per million to 5% by volume of chlorine gas, typically 0.25 percent to 1.2 percent, and most typically 0.5 percent to 1 percent chlorine. There should be enough methane (or others gaseous hydrocarbon) added to the system to provide a slight excess to react with all of this chlorine in the system. The specific amount can be easily calculated by one skilled in this art based on the moles of chlorine in the system.

The amount of hydrogen in the system should be enough to convert all of the halogenated hydrocarbon in the presence of the less than 15% oxygen to oxides of carbon, water soluble halogen compounds and water vapor. This amount of hydrogen is typically at least 0.1 percent by volume, more typically 0.35 percent to 0.7 percent by volume, and most typically for the residual gas system described in the present application, about 0.5 percent by volume.

The oxygen is always present in the residual gas system throughout the reactions described. This oxygen content is less than 15 percent by volume and is typically reduced by about 2 percent by volume by virtue of the gaseous hydrocarbon reaction with the residual gases under the conditions described in the present application. While the system of the present invention typically has an oxygen content less than 15 percent by volume, more typically about 8 percent up to about 15 percent, and most typically about 12 percent, it is still workable with oxygen contents less than these volume. However, the key advantage of the present invention, is the fact that it can work in these high oxygen contents which is not typical of systems of the prior art.

Alternate embodiments of the present invention will be apparent to those skilled in the art without departing from the scope of the present invention. For example, the present invention applies equally to other processes such as the halogenation of metals and metal oxides. Similarly, the use of alternate feed stock materials besides silicontetrachloride and combustion gases besides hydrogen, air, and natural gas may be used without departing from the scope of the present invention. Burner conditions may also be varied due to the availability of combustion materials or feedstocks. The residual gases generated may therefore depart from the specific compositions and concentrations of free chlorine presented without departing from the scope of the invention.

## Claims

1. A process for treating residual gases containing elemental halogen in the presence of oxygen, the elemental halogen being present in an amount by volume of 100 parts per million to 5%, the oxygen being present by volume in an amount less than 15%, said process comprising the steps of:
   introducing a sufficient quantity of gaseous hydrocarbon to said residual gases to provide at least 2 hydrogen atoms equivalents per mole of elemental halogen, by at least one dispersion means, wherein said means provides for uniform dispersion of said gaseous hydrocarbon within said residual gasses,
   converting substantially all of said elemental halogen to water soluble halogen compounds and product gases comprising halogenated hydrocarbons and water vapor,
   introducing at least 0.1% by volume of gaseous hydrogen to said product gases by at least one dispersion means, said product gases still containing oxygen in an amount less than 15% by volume, wherein said means provides for uniform dispersion of said gaseous hydrogen within said product gases, and
   converting substantially all of said halogenated hydrocarbons to oxides of carbon, water soluble halogen compounds, and water vapor,
   wherein said gaseous hydrocarbon and gaseous hydrogen are introduced to said residual and product gases at gas temperatures of between about 571°C to about 788°C , and
   removing said water soluble halogen compounds from the process.

2. The process of claim 1 wherein said gaseous hydrocarbon and said gaseous hydrogen are simultaneously introduced to said residual gases.

3. The process of claim 1 wherein said gaseous hydrocarbon corresponds to the formula $C_nH_{2n+2}$ and n is 1 to 4.

4. The process of claim 3 wherein said gaseous hydrocarbon is methane.

5. The process of claim 3 wherein said gaseous hydrocarbon is natural gas.

6. The process of claim 5 wherein said reaction temperature is between about 604°C to about 760°C .

7. The process of claim 2 wherein said quantity of gaseous hydrocarbon introduced forms a stoichiometric ratio with respect to free halogen present in the residual gases of less than about 1.5.

8. The process of claim 2 wherein said quantity of gaseous hydrogen introduced forms a stoichiometric ratio with respect to free halogen present in the residual gases of less than about 2.

9. The process of claim 1 wherein said residual gases are generated by the hydrolytic combustion of volatile halogens of metals and mixtures thereof.

10. The process of claim 9 wherein said gaseous hydrocarbon is introduced to said residual gases by dispersion means at two separate locations prior to hydrogen introduction.

11. The process of claim 9 wherein said gaseous hydrocarbon corresponds to the formula $C_nH_{2n+2}$ and n is 1 to 4.

12. The process of claim 9 wherein said gaseous hydrocarbon is natural gas.

13. The process of claim 11 wherein said gaseous hydrocarbon is methane.

14. The process of claim 12 wherein said gaseous hydrocarbon and hydrogen are introduced at residual and product gas temperatures between about 649°C to about 732°C.

15. The process of claim 14 wherein said hydrogen introduction occurs at a product gas temperature of between about 693°C to about 732°C.

**Patentansprüche**

1. Verfahren zur Behandlung von Abgasen, die elementare Halogene bei vorhandenen Sauerstoff enthalten, wobei das elementare Halogen mit einem Volumenbetrag von 100 Teilen pro Million bis 5% vorhanden ist, der Sauerstoff in einem Volumenbetrag von weniger als 15% vorhanden ist und das Verfahren die Schritte aufweist:
Zuführung einer ausreichenden Menge von gasförmigem Kohlenwasserstoff zu den Abgasen, um wenigstens 2 Wasserstoffatome pro Mol vom elementaren Halogen durch wenigstens eine Dispersionseinrichtung vorzugeben, wobei diese Einrichtung eine gleichförmige Dispersion des gasförmigen Kohlenwasserstoffes innerhalb der Abgase vorgibt,
Umwandlung von im wesentlichen allem elementaren Halogen in wasserlösliche Halogengemische und Produktgase, die halogenierte Kohlenwasserstoff und Wasserdampf enthalten,
Zuführung von wenigsten 0,1 Vol.-% von gasförmigem Wasserstoff zu den Produktgasen durch wenigstens eine Dispersionseinrichtung, wobei die Produktgase noch Sauerstoff in einem Betrag von weniger als 15 Vol.-% enthalten und wobei die Einrichtung eine gleichförmige Dispersion des gasförmigen Wasserstoffes innerhalb der Produktgase vorgibt, und
Umwandlung von im wesentlichen allen halogenierten Kohlenwasserstoffen in Kohlenoxide, wasserlösliche Halogengemische und Wasserdampf, wobei der gasförmige Kohlenwasserstoff und der gasförmige Wasserstoff in die Abgase und Produktgase bei Gastemperaturen zwischen ungefähr 571°C und ungefähr 788°C eingeführt werden, und Entfernung der wasserlöslichen Halogengemische aus dem Prozeß.

2. Verfahren nach Anspruch 1, wobei der gasförmige Kohlenwasserstoff und der gasförmige Wasserstoff gleichzeitig den Abgasen zugeführt werden.

3. Verfahren nach Anspruch 1, wobei der gasförmige Kohlenwasserstoff der Formel $C_nH_{2n+2}$ entspricht und n zwischen 1 und 4 liegt.

4. Verfahren nach Anspruch 3, wobei der gasförmige Kohlenwasserstoff Methan ist.

5. Verfahren nach Anspruch 3, wobei der gasförmige Kohlenwasserstoff Erdgas ist.

6. Verfahren nach Anspruch 5, wobei die Reaktionstemperatur zwischen ungefähr 604°C und 760°C liegt.

7. Verfahren nach Anspruch 2, wobei die Menge des zugführten Kohlenwasserstoffes ein stöchiometrisches Verhältnis mit weniger als ungefähr 1,5 in bezug auf das in den Abgasen vorliegende freie Halogen bildet.

8. Verfahren nach Anspruch 2, wobei die Menge des zugeführten Kohlenwasserstoffes ein stöchiometrisches Verhältnis mit weniger als ungefähr 2,0 in bezug auf das in den Abgasen vorliegende Halogen bildet.

9. Verfahren nach Anspruch 1, wobei die Abgase durch die hydrolytische Verbrennung von flüchtigen Halogenen aus Metallen und Mischungen derselben erzeugt werden.

10. Verfahren nach Anspruch 9, wobei der gasförmige Kohlenwasserstoff in die Abgase durch eine Dispersionseinrichtung an zwei getrennten Orten vor der Einführung des Wasserstoffes zugeführt wird.

11. Verfahren nach Anspruch 9, wobei der gasförmige Kohlenwasserstoff der Formel $C_nH_{2n+2}$ entspricht und n zwischen 1 und 4 liegt.

12. Verfahren nach Anspruch 9, wobei der gasförmige Kohlenwasserstoff Inertgas ist.

13. Verfahren nach Anspruch 11, wobei der gasförmige Kohlenwasserstoff Methan ist.

14. Verfahren nach Anspruch 12, wobei der gasförmige Kohlenwasserstoff und der Wasserstoff bei Restgas- und Produktgas Temperaturen zwischen ungefähr 649°C und ungefähr 732°C zugeführt werden.

15. Verfahren nach Anspruch 14, wobei die Zuführung von Wasserstoff bei einer Produktgastemperatur zwischen ungefähr 693°C und ungefähr 732°C erfolgt.

## Revendications

1. Procédé de traitement de gaz résiduaires contenant de l'halogène élémentaire, en présence d'oxygène, l'halogène élémentaire étant présent en une quantité en volume de 100 parties par million à 5%, l'oxygène étant présent en volume en une quantité inférieure à 15%, le procédé comprenant les étapes de :
   introduction d'une quantité suffisante d'hydrocarbure gazeux dans les gaz résiduaires pour fournir au moins 2 équivalents atomiques d'hydrogène par mole d'halogène élémentaire, par au moins un dispositif de dispersion, où le dispositif sert à obtenir une dispersion uniforme de l'hydrocarbure gazeux dans les gaz résiduaires,
   conversion de sensiblement tout l'halogène élémentaire en composés halogénés solubles dans l'eau et en produits gazeux comprenant des hydrocarbures halogénés et de la vapeur d'eau,
   introduction d'au moins 0,1% en volume d'hydrogène gazeux dans les produits gazeux par au moins un dispositif de dispersion, les produits gazeux contenant encore de l'oxygène en une quantité inférieure à 15% en volume, où le dispositif sert à obtenir une dispersion uniforme de l'hydrogène gazeux dans les produits gazeux, et
   conversion de sensiblement tous les hydrocarbures halogénés en oxydes de carbone, composés halogénés solubles dans l'eau et vapeur d'eau,
   où l'hydrocarbure gazeux et l'hydrogène gazeux sont introduits dans les gaz résiduaires et les produits gazeux à des températures des gaz situées entre environ 571°C et environ 788°C, et
   élimination des composés halogénés solubles dans l'eau à partir du procédé.

2. Procédé suivant la revendication 1, dans lequel l'hydrocarbure gazeux et l'hydrogène gazeux sont introduits simultanément dans les gaz résiduaires.

3. Procédé suivant la revendication 1, dans lequel l'hydrocarbure gazeux correspond à la formule $C_nH_{2n+2}$ et n est 1 à 4.

4. Procédé suivant la revendication 3, dans lequel l'hydrocarbure gazeux est le méthane.

5. Procédé suivant la revendication 3, dans lequel l'hydrocarbure gazeux est le gaz naturel.

6. Procédé suivant la revendication 5, dans lequel la température de la réaction se situe entre environ 604°C et environ 760°C.

7. Procédé suivant la revendication 2, dans lequel la quantité d'hydrocarbure gazeux introduit forme un rapport stoechiométrique par rapport à l'halogène libre présent dans les gaz résiduaires, inférieur à environ 1,5.

8. Procédé suivant la revendication 2, dans lequel la quantité d'hydrocarbure gazeux introduit forme un rapport stoechiométrique par rapport à l'halogène libre présent dans les gaz résiduaires, inférieur à environ 2.

9. Procédé suivant la revendication 1, dans lequel les gaz résiduaires sont générés par la combustion hydrolytique d'halogénures métalliques volatils et de mélanges de ceux-ci.

10. Procédé suivant la revendication 9, dans lequel l'hydrocarbure gazeux est introduit dans les gaz résiduaires par un dispositif de dispersion à deux endroits séparés avant introduction de l'hydrogène.

11. Procédé suivant la revendication 9, dans lequel l'hydrocarbure gazeux correspond à la formule $C_nH_{2n+2}$ et n est 1 à 4.

12. Procédé suivant la revendication 9, dans lequel l'hydrocarbure gazeux est le gaz naturel.

13. Procédé suivant la revendication 11, dans lequel l'hydrocarbure gazeux est le méthane.

14. Procédé suivant la revendication 12, dans lequel l'hydrocarbure gazeux et l'hydrogène sont introduits à des températures des gaz résiduaires et des produits gazeux situées entre environ 649°C et environ 732°C.

15. Procédé suivant la revendication 14, dans lequel l'introduction de l'hydrogène se fait à une température des produits gazeux située entre environ 693°C et environ 732°C.

FIG. 1
PRIOR ART

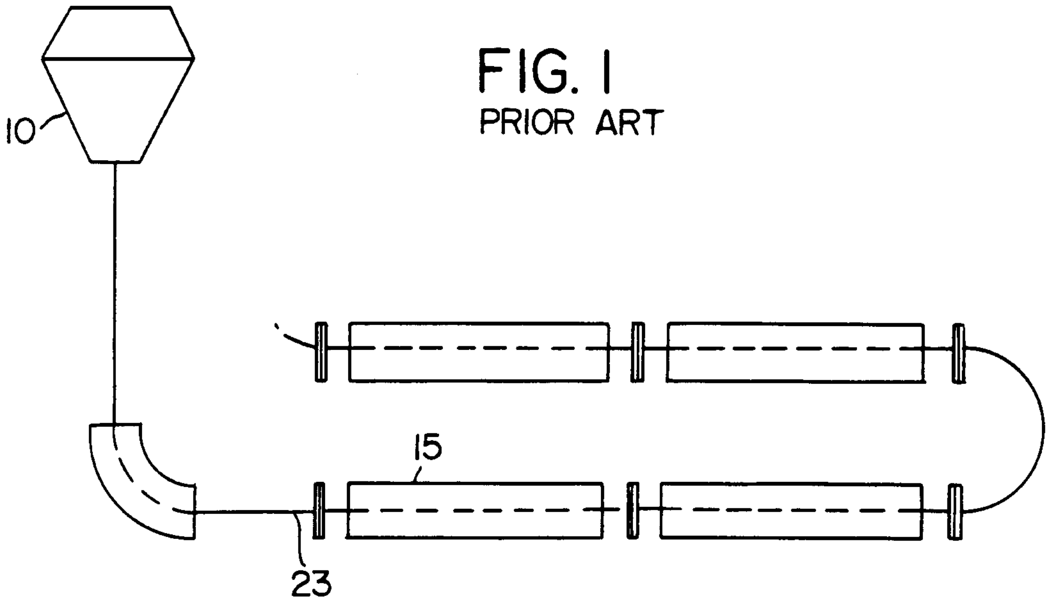


FIG. 2
PRIOR ART

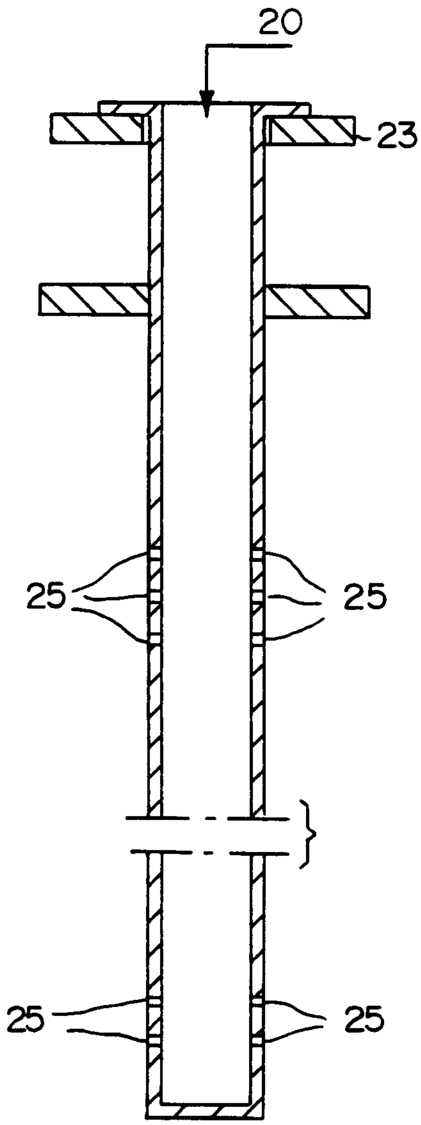

FIG. 3

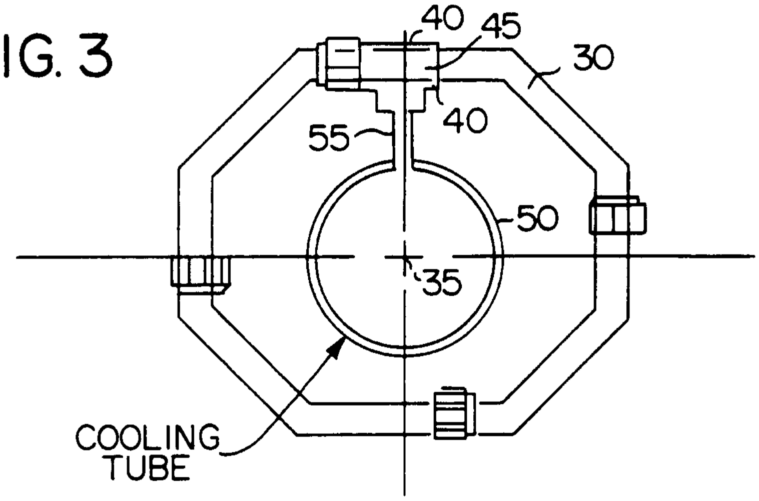


FIG. 4

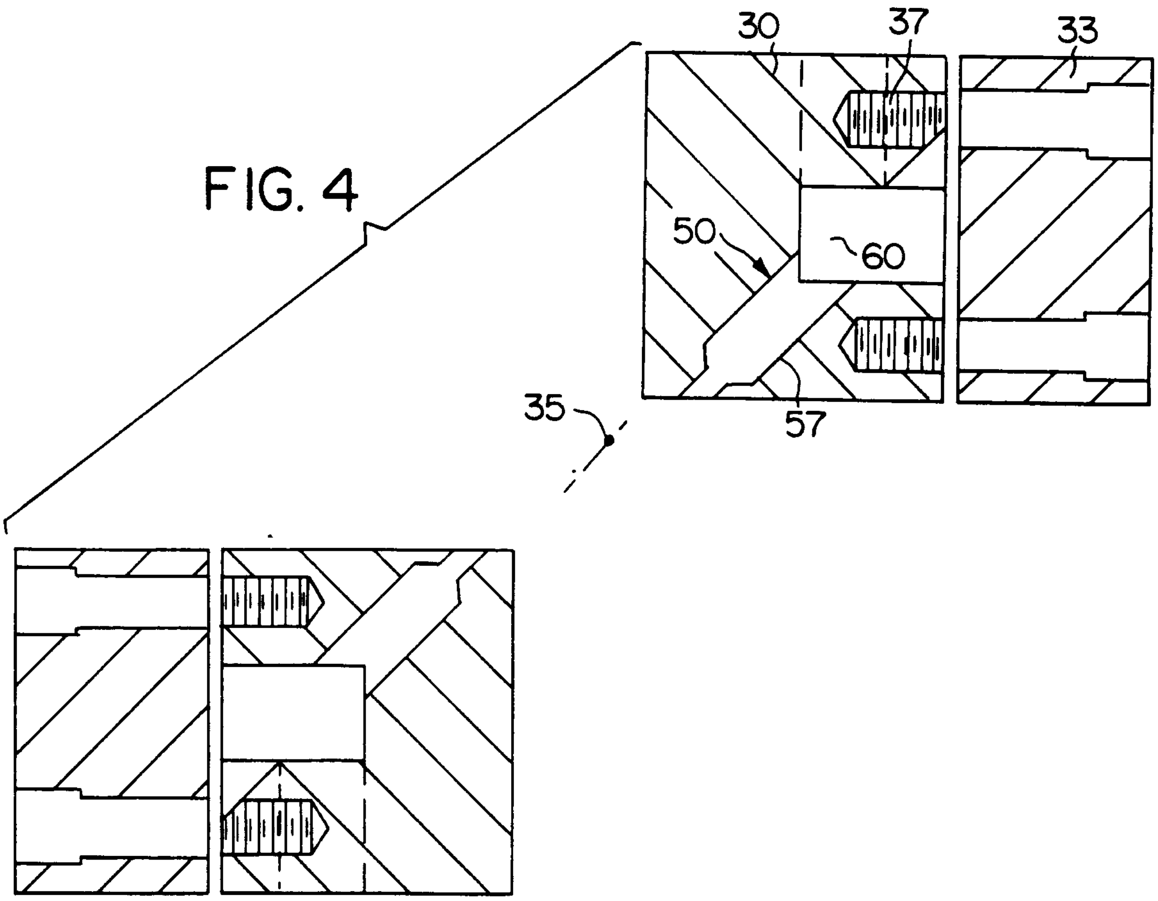

FIG. 5

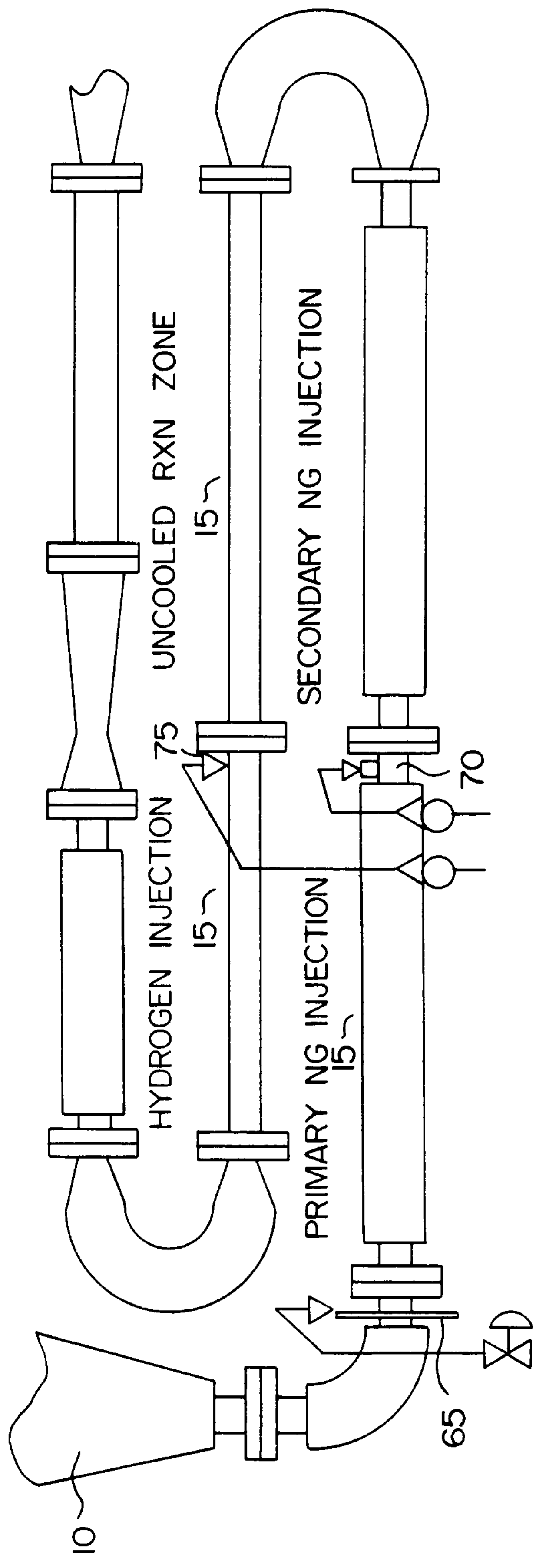
UNCOOLED RXN ZONE
SECONDARY NG INJECTION
HYDROGEN INJECTION
PRIMARY NG INJECTION
15
15
15
75
70
65
10

FIG. 6

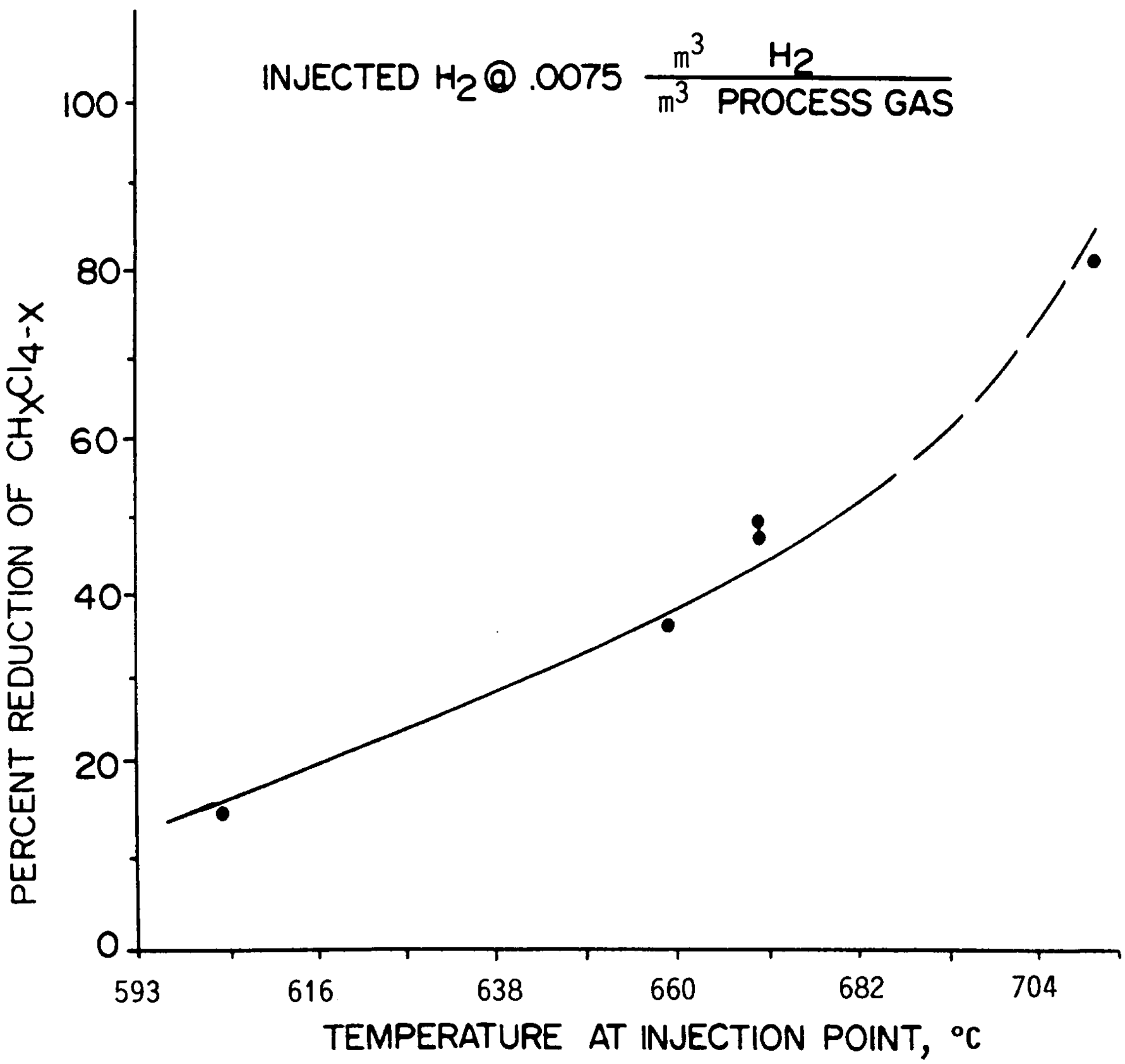
INJECTED H2 @ .0075 m3 H2 / m3 PROCESS GAS
PERCENT REDUCTION OF CHXCl4-X
100
80
60
40
20
0
593
616
638
660
682
704
TEMPERATURE AT INJECTION POINT, °C